# DEMANDE DE BREVET EUROPEEN

(11) **EP 2 028 047 A1**
(43) Date de publication de la demande: **25.02.2009**
(21) Numéro de dépôt: 08370013.8
(22) Date de dépôt: 09.07.2008
(51) Int. Cl.: B60Q 1/54

(54) **Dispositif d'assistance à la conduite d'un véhicule**

(30) Priorité: 21.08.2007 FR 0705947
(71) Demandeur: Ekman, Adolphe, 59800 Lille (FR); Ekman, Benjamin, 29000 Quimper (FR); Ekman, Noémie, 75015 Paris (FR); Naver, Michel, 1190 Bruxelles (BE)
(72) Inventeur: Ekman, Adolphe, 59800 Lille (FR); Ekman, Benjamin, 29000 Quimper (FR); Ekman, Noémie, 75015 Paris (FR); Naver, Michel, 1190 Bruxelles (BE)

(57) **Abrégé**

L'invention se rapporte à un dispositif d'assistance à la conduite comprenant :
- un système de localisation du véhicule,
- un système d'information au conducteur des conditions de circulation dont notamment d'informations sur la vitesse autorisée sur le tronçon parcouru, ce dispositif étant caractérisé en ce qu'il comprend un moyen (7) d'information des tiers autres que ceux occupant le dit véhicule du non respect des obligations du conducteur.

## Description

L'invention se rapporte à un dispositif d'assistance à la conduite d'un véhicule.

Pour faciliter la conduite des véhicules, il est connu de les équiper d'un système d'aide à la conduite basé sur le principe de la localisation du véhicule au moyen de satellites, cette localisation étant connue sous la dénomination GPS. La localisation est combinée avec une cartographie électronique permettant, d'une part, d'afficher la position du véhicule sur une carte figurant sur un écran et, d'autre part d'indiquer au conducteur les changements de direction avec une approximation de la distance avant le changement de direction.

Ces dispositifs peuvent également afficher la vitesse autorisée sur le tronçon parcouru ainsi que les zones de ralentissements provoqués par la surcharge du réseau routier.

Le conducteur peut décider de tenir compte des informations fournies mais n'est pas obligé de les suivre car, par exemple , rien n'indique qu'il respecte les indications de vitesse ou autre.

Ce type de matériel d'assistance à la conduite est fixé à demeure ou monté amovible sur le véhicule. Il ne prend pas en compte le type de véhicule et donc ses performances. Il ne tient pas compte des capacités du conducteur, de son âge, de ses capacités réflexes, de la validité ou non de son permis de conduire, du nombre de points dont il dispose encore sur son permis.

On connait une installation permettant de signaler au conducteur et éventuellement aux passagers du véhicule que le conducteur circule à une vitesse supérieure à celle autorisée en modifiant la couleur d'un écran.

Cette solution est intéressante mais insuffisante pour les autres usagers de la route.

Il est connu US 6 163 277 une installation qui signale l'excès de vitesse par rapport à celle préconisée par la loi. Mais celle-ci ne tient toujours pas compte du type de véhicule ou de certaines dispositions de la législation.

Il convient dès lors de proposer une solution.

A cet effet, l'invention a pour objet un dispositif d'assistance à la conduite comprenant :
- un système de localisation du véhicule,
- un système d'information au conducteur des conditions de circulation dont notamment d'informations sur la vitesse autorisée sur le tronçon parcouru un moyen d'information des tiers autres que ceux occupant le dit véhicule, du non respect des obligations du conducteur, ce dispositif étant caractérisé en ce qu'il comprend un système prenant en compte les paramètres du véhicule et les paramètres du conducteur pour tenir compte des spécificités du véhicule et du conducteur.

L'invention sera bien comprise à l'aide de la description ci après faite à titre d'exemple non limitatif en regard du dessin qui représente schématiquement:

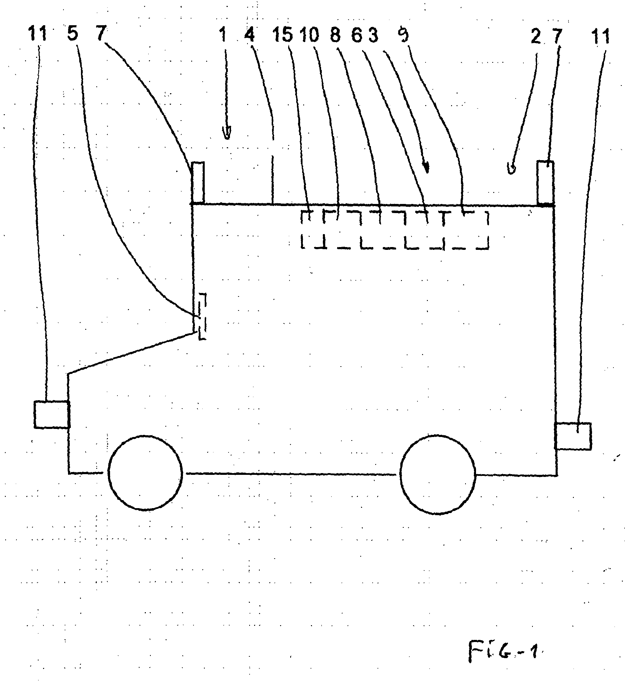

FIG 1 Vue schématique d'un véhicule équipé d'un système d'aide à la conduite

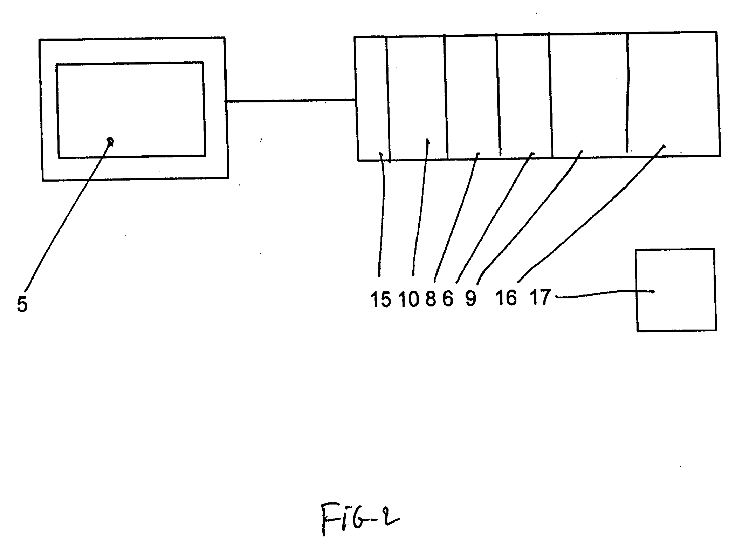

FIG 2 Schéma d'un système d'aide à la conduite.

En se reportant au dessin, on voit un dispositif 1 d'assistance à la conduite implanté dans un véhicule 2.

Ce dispositif d'assistance comprend un système 3 de localisation du véhicule au moyen de satellites. Le principe est appelé couramment GPS.

Le dispositif comprend donc une antenne 4 de réception des signaux émis par les satellites.

Une cartographie électronique et un moniteur 5 permettent au conducteur de visualiser une carte ainsi que la position du véhicule afin de le guider par rapport à un itinéraire choisi par lui ou par une électronique et un logiciel. Des informations visuelles et/ou sonores signalent par exemple, les changements de direction.

Le dispositif comprend également un système 6 d'information au conducteur des conditions de circulation dont notamment une information sur la vitesse autorisée sur le tronçon de route où le véhicule circule ou va circuler. Ce système lui indique que le tronçon de route est une portion limitée à, par exemple, 50 Km/h.

De manière remarquable, le dispositif comprend un moyen 7 d'information des tiers autres que ceux occupant le dit véhicule du non respect des obligations du conducteur vis-à-vis du code de la route et/ou de certaines conditions personnelles et/ou liées à son véhicule.

Pour cela, des moyens 8 de comparaison vont, par exemple contrôler si la vitesse réelle du véhicule est supérieure à celle autorisée et le signaler à la fois au conducteur mais également aux autres véhicules et, éventuellement aux services de la route tels les gendarmes.

Par exemple, on équipe le véhicule d'au moins un avertisseur 7 par exemple lumineux, qui signalera l'infraction. Par exemple une lampe sera allumée si le véhicule circule à une vitesse trop élevée. Les véhicules dans l'environnement immédiat pourront donc voir que ce conducteur est en infraction et prendre des mesures pour limiter les risques d'accident, par exemple en augmentant les distances de sécurité. Cet avertisseur lumineux pourra être monté aux quatre coins du véhicule.

On peut prévoir un moyen 8 de gradation. L'avertisseur lumineux est vert lorsque le véhicule respecte les consignes nationales, orange si la consigne de vitesse est dépassée mais en dessous de 110% de la vitesse autorisée et rouge au dessus de 110%. Il s'agit là de valeurs fournies à titre d'exemple.

On peut également avertir par ondes hertziennes, en adressant aux gendarmes le numéro du véhicule, sa localisation etc.

Le système comprend donc un moyen 8 de comparaison des paramètres réels de déplacement du véhicule avec les obligations nationales de circulation qui tiennent compte du type de véhicule et des paramètres du conducteur.

Le dispositif comporte également un système 9 prenant en compte les paramètres du véhicule et/ou du conducteur pour tenir compte des spécificités du véhicule et du conducteur.

En effet, en France, les jeunes conducteurs doivent circuler à une vitesse plus réduite pendant une période de deux ans. Il suffit d'indiquer, lors du démarrage au véhicule que le chauffeur est un jeune chauffeur pour que le système s'adapte. Une carte personnelle permet de stocker, dans une mémoire, des informations sur le possesseur de la carte et/ou du véhicule.

Il en est de même des camions qui ne peuvent dépasser la vitesse de 90 km/H.

On peut surveiller le temps de conduite et indiquer si le temps préconisé par les spécialistes est dépassé. Il y aura donc un moyen 10 de surveillance du temps de conduite. Il peut y avoir une table de temps correspondant à l'âge du conducteur. Il y aura donc un moyen de comparaison du temps de conduite avec des valeurs préalablement introduites dans une mémoire.

On peut également prévoir d'introduire à chaque utilisation du véhicule l'identité du chauffeur pour vérifier que celui-ci dispose de l'autorisation nécessaire à la conduite sur route. Une vérification par appel d'un serveur confirmera la possibilité de conduire le véhicule.

Les données concernant le conducteur, son âge, son traitement médical, son acuité visuelle etc... seront inscrit sur une carte 17 qui devra être lue par le dispositif d'assistance pour pouvoir démarrer.

Une carte pour le véhicule sera également prévue, notamment pour les dispositifs nomades et comportera des informations sur le véhicule âge, dernière révision, changement des pneumatiques, type de pneumatique qui permettront d'optimiser, par exemple la distance de freinage.

Seront également prévus des caméras 11 embarquées qui montreront aux chauffeurs une image de ce qui précède le véhicule et/ou de la vue arrière. Indépendamment ou en combinaison avec les dispositifs précédemment décrits, sur cette image, sera indiquée en surimpression la distance d'arrêt du véhicule calculée à partir de la vitesse réelle du véhicule, de sa charge (nombre de passager) avec prise en compte du type de véhicule.

Est donc prévu, un moyen pour surveiller la vitesse, calculer la distance d'arrêt en fonction de divers paramètres, pluie, charge et un moyen 15 pour afficher en surimpression la distance d'arrêt du véhicule

Ce dispositif est particulièrement adapté aux autocars qui acheminent des passagers sur de grandes distances. Cela peut permettre aux passagers d'influer sur la conduite du chauffeur. En enregistrant dans une mémoire 16 le respect scrupuleux du code de la route, le propriétaire du véhicule pourra éventuellement obtenir de son assureur une réduction tarifaire. Pour les sociétés de transport, elles pourront utiliser les bons résultats comme une incitation à les choisir comme transporteur.

L'écran de visualisation se trouvera de préférence dans l'axe de vision du conducteur. Il pourra faire appel à la technologie de visualisation sur le pare-brise.

Le compteur de vitesse entourera de préférence l'écran et sera par exemple constitué par des segments de couleur indiquant la plage de vitesse.

Le dispositif comprend un moyen de tester le conducteur en vue d'évaluer ses capacités.

## Revendications

1. Dispositif d'assistance à la conduite comprenant :
- un système de localisation du véhicule,
- un système d'information au conducteur des conditions de circulation dont notamment d'informations sur la vitesse autorisée sur le tronçon parcouru,
- un moyen d'information des tiers autres que ceux occupant le dit véhicule, du non respect des obligations du conducteur, ce dispositif étant **caractérisé en ce qu'**il comprend un système (9) prenant en compte les paramètres du véhicule et les paramètres du conducteur pour tenir compte des spécificités du véhicule et du conducteur.

2. Dispositif d'assistance à la conduite selon la revendication 1 **caractérisé en ce qu'**il comprend un moyen (8) de comparaison des paramètres réels de déplacement du véhicule avec les obligations nationales de circulation.

3. Dispositif d'assistance à la conduite selon la revendication 1 ou 2 **caractérisé en ce qu'**il comporte au moins un avertisseur lumineux indiquant au tiers non occupant le véhicule le non respect des conditions de circulation.

4. Dispositif d'assistance à la conduite selon la revendication 3 **caractérisé en ce que** l'avertisseur lumineux change de couleur selon que le véhicule respecte ou non les obligations du code de la route.

5. Dispositif d'assistance à la conduite selon la revendication 1 ou 2 **caractérisé en ce qu'**il comprend un avertisseur par ondes hertziennes du non respect du code de la route.

6. Dispositif d'assistance à la conduite selon l'une quelconque des revendications précédentes **caractérisé en ce qu'**il comprend un moyen (15) pour afficher en surimpression la distance d'arrêt du véhicule.

7. Dispositif d'assistance a la conduite selon l'une quelconque des revendications précédentes **caractérisé en ce qu'**il comprend une mémoire (16) pour enregistrer las paramètres de conduite.

8. Dispositif d'assistance à la conduite selon l'une quelconque des revendications principale **caractérisé en ce qu'**il comprend une carte mémoire (17) personnelle sur laquelle sont mémorisées des informations sur le possesseur de la carte.

9. Dispositif d'assistance à la conduite selon l'une quelconque des revendications précédentes **caractérisé en ce qu'**il comprend une carte mémoire sur laquelle sont mémorisées des informations sur le véhicule équipé du dispositif d'assistance.

10. Dispositif d'assistance à la conduite selon l'une quelconque des revendications précédentes **caractérisé en ce qu'**il comprend un moniteur (5) placé dans l'axe de vision du conducteur.

11. Dispositif d'assistance à la conduite selon la revendication 10 **caractérisé en ce que** le moniteur est entouré par des segments de couleur indiquant des plages de vitesses.

12. Dispositif d'assistance à la conduite selon l'une quelconque des revendications précédentes **caractérisé en ce que** le dispositif comprend un moyen de tester le conducteur en vue d'évaluer ses capacités.
